# EUROPEAN PATENT APPLICATION

(11) **EP 2 007 099 A1**
(43) Date of publication of application: **24.12.2008**
(21) Application number: 07110746.0
(22) Date of filing: 21.06.2007
(51) Int. Cl.: H04L 29/06

(54) **Method and system for distributing a multimedia file**

(71) Applicant: Cool Xtreme Channel S.L., 46980 Paterna (Valencia) (ES)
(72) Inventor: Nácher Gascón, Vicente, 46980, Paterna (Valencia) (ES)
(74) Representative: Pons Arino, Angel

(57) **Abstract**

The present invention relates to a method for distributing a multimedia file from a first computer system to a second computer system, through a communication network.

The invention also relates to a system for distributing multimedia files, suitable for carrying out such a method; a method for receiving a multimedia file; a computer system for receiving a multimedia file suitable for carrying out such a method; and a computer system for distributing a multimedia file.

## Description

The present invention relates to a method for distributing a multimedia file from a first computer system to a second computer system, through a communication network.

The invention also relates to a system for distributing multimedia files, suitable for carrying out such a method; a method for receiving a multimedia file; a computer system for receiving a multimedia file suitable for carrying out such a method; and a computer system for distributing a multimedia file.

### BACKGROUND ART

Although in recent years, internet speed has substantially increased, it still does not seem enough for the users to take advantage of it. Besides, the larger speed increase has occurred in the most populated towns, that is, in the most important city centres, mainly because said towns are priority markets for the telecommunications companies. Internet speeds in small or rural towns are still deficient nowadays. There even is a large amount of towns without a broad band access, being ADSL and/or cable.

One of the latest novelties in the internet connection field is the ADSL2+ technology, which offers download speeds up to 20Mbps, although reality is much different. Normally, the users end up with half of the promised.

In a study made in the ADSLZONE website (http://www.adslzone.net/estudio-velocidad-adsl-y-cable-2007.html), within a sample of 250,000 speed analysis made by the users themselves, the most outstanding from the global results is that ADSL2+ of up to 20Mbps still finds lots of difficulty for offering better connection conditions than the 10Mbps modality. That is due to the fact that the fading of the 20Mbps modality is proportionally more demanding than the other slower modalities, which does not correspond to the telephone stations distribution, since there normally are large distances to the users for them to receive correctly the 20Mbps modalities.

Because of that, it seems that ADSL2+ technology is not as efficient as it should be, and a technology that does not have the great determining distance fading factors found in ADSL technology should be developed.

The problem found with the speed ranges offered nowadays by companies is that the internet usage is limited and cannot be extended to other services. This way, for example, the actual speeds do not permit accessing to a particular data type, for example multimedia files, such as movies or music, in an immediate way, mainly because the large size of the files cannot be processed by said speed.

Basically, the problem arises from the fact that, if a user wishes to access files reasonably large, he should have previously ordered its download, hours or even days before. It is not possible to make a decision (for example, watching a movie) and executing it (play the movie) in an immediate way.

On the other hand, a known technology for distributing a multimedia file is streaming, but said technology (basically the quality of the reproduction of the multimedia file) depends too much on the speed of the internet connection. A low speed involves a bad quality in the reproduction.

### DISCLOSURE OF THE INVENTION

An object of the invention is therefore to provide a method for distributing a multimedia file from a computer system to another computer system, which multimedia file may be immediately played in the other computer system.

This object is achieved in accordance with claim 1 by providing a method for distributing a multimedia file from a first computer system to a second computer system, through a communication network, the multimedia file being split in at least two portions, the method comprising the steps of:
a) distributing the first portion of the multimedia file from the first computer system to the second computer system, through the communication network;
b) verifying if the first portion is completely distributed to the second computer system;
in case of positive result, the method comprises the step of:
c) distributing the second portion of the multimedia file to the second computer system, such that, during said distribution of the second portion, the first portion may be played in the second computer system.

This way, the provision of the multimedia file in portions allows playing the first portion while the following portion is being downloaded. When the reproduction of the first portion finishes, the second portion has been completely downloaded and the reproduction of the multimedia files may be performed in a continuous manner.

Consequently, the method allows immediately having at one's disposal the multimedia file to be played.

The method further comprises a step (d) of selecting the multimedia file to be distributed to the second computer system. Said selection may be performed in the second computer system or in the first computer system according to a set of parameters associated to the second computer system. Said set of parameters may be, for example, the type of multimedia files normally downloaded by the second computer system and/or the time in which downloads are requested.

According to another aspect, the invention provides a computer program comprising program instructions for causing a computer system to perform the method for distributing a multimedia file. Said computer program may be, for example, embodied on a record medium, stored in a computer memory, embodied in a read-only memory, or carried on an optical or electrical carrier signal.

According to another aspect of the invention, it provides a system for distributing a multimedia file from a first computer system to a second computer system, through a communication network, in which the multimedia file is split in at least two portions and in which the system comprises means for distributing the first portion of the multimedia file from the first computer system to the second computer system, through the communication network; means for verifying if the first portion is completely distributed to the second computer system; means for distributing the second portion of the multimedia file to the second computer system, such that, during said distribution of the second portion, the first portion may be played in the second computer system.

According to a preferred embodiment of the invention, the multimedia file is split in three portions, the first portion being not higher than 5% of the multimedia file, the second portion being not higher than 25%, and the third portion being the remaining portion of the multimedia file. Preferably, the third portion would not have to be higher than 70% of the multimedia file. In other case, the multimedia file would have to be split in more portions. Thus, for example, a multimedia file in high definition format would have to be split in a lot of portions. Basically, the number of portions may depend on the size of the multimedia file and/or the speed of the connection to the communication network.

According to another embodiment of the invention, the first computer system comprises a first set of server computers for validating the second computer system, a second set of server computers for storing the multimedia files to be distributed, and a third set of server computers for sending data, to the second computer system, about the multimedia files stored in the second set of server computers.

The first set of server computers has assigned at least two static IP addresses, and preferably four static IP addresses. This way, it is possible to improve the response of the system in front of overload problems.

According to a preferred embodiment of the invention, the second computer system comprises means for storing the distributed portions of the multimedia files and another data, said storing means being, for example, a flash memory, a solid state drive (NAND flash (non-volatile) or SDRAM (volatile)) or like.

Further, the multimedia files and another data (for example, the number that identify the second computer system in the system) stored in said storing means may be encrypted. Furthermore, the second computer system may comprise means for removing the multimedia files and the other data stored in the storing means and in other memories of the second computer system, in case that the second computer system is opened.

According to another aspect, the invention provides a computer system for distributing a multimedia file to another computer system, through a communication network, the multimedia file being split in at least two portions and the computer system comprising means for distributing the first portion of the multimedia file to the other computer system, through the communication network; means for verifying if the first portion is completely distributed to the other computer system; means for distributing the second portion of the multimedia file to the other computer system, such that, during said distribution of the second portion, the first portion may be played in the other computer system.

According to yet another aspect of the invention, it provides a computer system for receiving a multimedia file distributed from another computer system, through a communication network, the multimedia file being split in at least two portions and in the computer system comprising means for receiving the first portion of the multimedia file distributed from the other computer system, through the communication network; means for receiving the second portion of the multimedia file, such that, during said reception of the second portion, the first portion may be played in the computer system.

According to another aspect, the invention provides a method for receiving, in a computer system, a multimedia file distributed from another computer system, through a communication network, the multimedia file being split in at least two portions, the method comprising the steps of:
e) receiving, in the computer system, the first portion of the multimedia file distributed from the other computer system, through the communication network;
f) receiving the second portion of the multimedia file, such that, during said reception of the second portion, the first portion may be played in the computer system.

Said method may comprise a step (g) of playing, in the computer system, the first portion of the multimedia file during the reception of the second portion and a step (h) of playing the second portion of the multimedia file when the reproduction of the first portion is finished.

According to another aspect of the invention, it is provided a computer program comprising program instructions for causing a computer system to perform the method for receiving a multimedia file.

### BRIEF DESCRIPTION OF THE DRAWINGS

In the following detailed description of some possible embodiments, other features and advantages of the invention will appear, each description being made with reference to the following drawings:
Fig.1 is a schematic diagram illustrating a system for distributing a multimedia file, according to the invention;
Fig.2 is a schematic diagram illustrating a computer system for receiving a multimedia file, according to the invention;
Fig.3 is a flow diagram illustrating the method for distributing a multimedia file, according to the invention; and
Fig.4 is a flow chart illustrating the method for receiving a multimedia file, distributed according to the method of Fig.3.

### DETAILED DESCRIPTION

In the present description, a preferred embodiment of a method and a system for distributing a multimedia file will be described. More specifically, the invention is applied to a video-club online, the users being able to receive and play a multimedia file, such a movie or audio file, in few minutes, depending on the speed of the internet connection. The multimedia file is sent in portions, the first portion having the lower size. This way, the user may play the multimedia file, that is, the first portion of the multimedia file, while the following portion is being downloaded. When the playing of the first portion finishes, the following portion has been completely downloaded and the multimedia file follows its reproduction without interruptions.

The system of the invention may offer other services as, for example, internal mail (the messages are displayed in the television set) and any other service at home (VoIP, purchase of pizzas, etc.).

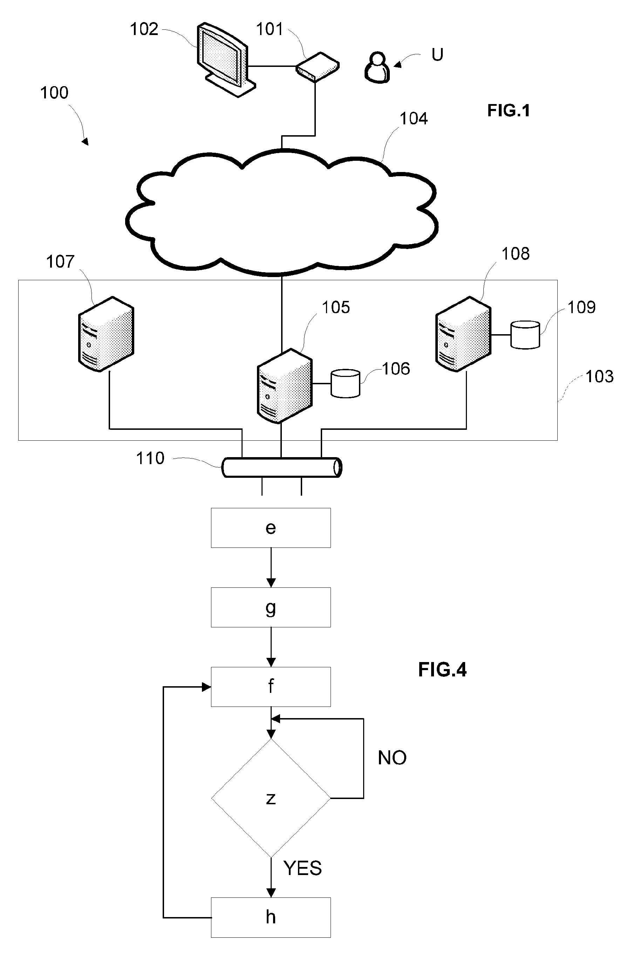

As can be seen in Fig.1, the system 100 for distributing a multimedia file comprises a first computer system 101, such a set top box (in the user's home), for receiving the multimedia file and playing it through a television set 102; a second computer system 103, such a server system, for sending, among other data, the multimedia files to the set top box 101, the set top box 101 and the server system 103 being connected by means of a global communication network 104, such a internet (e.g. ADSL or cable) or/and a VPN (Virtual Private Network) established between the set top box 101 and the server system 103.

The server system 103 comprises a first set of server computers 105 for validating the user U of the set top box 101 according to a database 106 of users; a second set of server computers 107, comprising a http server or like, for displaying the navigation interface in the television set 102, once the user is validated; and a third set of server computers 108 comprising means (e.g. a hard disk) for storing a database 109 of multimedia files. It is important to highlight that the multimedia files may be stored in portions or as a whole. In the last case, the multimedia file may be split in portions at the moment of sending it to the set top box 101 and the number of portion may be pre-fixed or may depend on, for example, any feature of the connection between the set top box and the server system 103, for example, the speed or the broadband of the internet connection or the size of the multimedia file. Further, the number of portions of a multimedia file may depend on the quality of the multimedia file. Thus, if the multimedia file has a high definition quality, the number of portion is greater than a multimedia file with a divx quality, because the size is different.

The first server computer 105, the second server computer 107 and the third server computer 108 are connected between them through an Ethernet network by a switch 110. Further, each server computer has a firewall (not shown) for protecting the contents stored in it.

The first set of servers 105 is the only one connected to the global communication network 104 and has assigned four static IPs. Thus, the set top box 101 can connect to the first set of servers 105 through the global communication network 104 by means of a VPN established between the set top box 101 and one of the assigned static IPs. The connection to one or other static IP depends on the value of the internal clock 205 of the microprocessor 201 of the set top box 101. Thus, depending on the fraction of second in which the order for establishing the VPN connection is sent, the VPN is established between one or other static IP. In case of overload in the assigned IP by the microprocessor 201, the order is resent and the microprocessor assigns another IP for establishing the VPN.

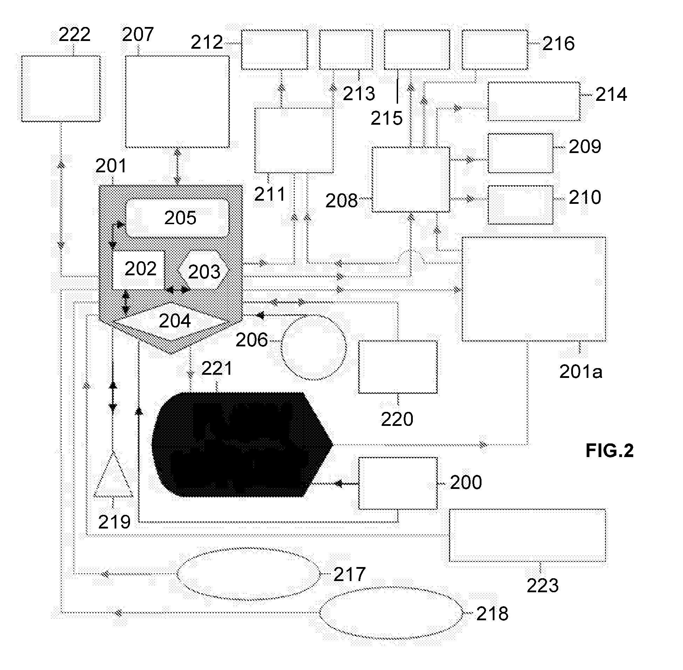

As can be seen in Fig.2, the set top box 101 comprises a source 200 for powering all the electronic of the set top box; a motherboard comprising a microcontroller 201 containing a digital signal processor (DSP) 202, a SDRAM unit 203, a flash unit 204 an internal clock 205, which is synchronised from the second computer system 103, and a battery power supply 206 for avoiding the damage of stored data; an audio/video decoder 201a; a network connector 207 (for example a wireless card - WiFi) for connecting the set top box 101 to the global communication network 104; an audio/video digital processor 208; a digital audio output SP/DIF 209, connected to said digital processor 208; an optical audio output 210, also connected to the digital processor 208; an audio/video analog processor 211; an analog audio/video output RCA 212 and a SCART 213, connected to the analog processor 211; a video output by components (Y, Pb, Pr) 214, connected to the digital processor 208; a digital video output DVI 215 and a digital video output HDMI (High Definition Multimedia Interface) 216, connected to the digital processor 208, the HDMI generating an output according to the standard 720i, 720p, 1080i and 1080p; a magnetic stripe credit card reader 217 and a chip credit card reader 218; Bluetooth system 219; at least one USB (Universal Serial Bus) port 220 for connecting devices such a pen-drive, a webcam or a mouse; and a first led (light emitting diode) for *"power",* a second led for *"downloading"* and a third led for *"stored data"* (not shown).

The microcontroller 201, through the network connection 207, downloads the selected multimedia file and stores it in the flash memory 221. By means of a multimedia player installed in the microcontroller 201, the multimedia file may be played, for example, acting on the remote control 223. In this case, the microcontroller sends a control signal to the audio/video decoder 201 a for decoding the audio/video signal (e.g. XviD in MPEG 4 part 2/AC3or MP3 or high definition compression MPEG 4 part 10 H.264/AVC - DD+). If the output signal must be an analog signal (the television set 102 is connected to the RCA connector 212 or to the SCART 213 of the set top box 101), said output signal is processed by the audio/video analog processor 211, whereas if the output signal must be a digital signal, said output signal is processed by the audio/video digital processor 208.

The set top box also comprises a protection system against its opening. Said protection system comprises jumpers, which "offers" an enough voltage for removing the contents (multimedia files, configuration data, etc.) stored in the flash memory 221 and the other memories of the set top box 101 (e.g. the flash memory 204 of the microcontroller 201).

The configuration parameters of the set top box 101 are stored in the microcontroller 201. The clock 205 of the microcontroller 201 is synchronised with the clock of the server system 103.

The set top box 101 also comprises a flash memory 221 (it could be any kind of memory, for example, a solid state drive (NAND flash (non-volatile) or SDRAM (volatile)) of 32 Gigabytes for storing the downloaded multimedia files from the server system 103; a communication port 222 as a serial (RS232) or DB9 port for connecting peripheral devices to the set top box 101 (used by the technical service); and an infrared remote control 223 for remotely controlling the set top box 101.

According to an embodiment of the invention, the multimedia file is only stored in the flash memory 221 for 24 hours. For said time, the user U may watch the movie without any limitation.

On the other hand, a peer to peer application may be used. The set top box 101 is a node of a peer to peer network. The multimedia files stored in the flash memory of the set top box 101 are accessible from the other nodes of the peer to peer network, that is, if another set top box of the system requests the download of a multimedia file stored in the set top box 101, a portion of the broadband of the internet connection 104 is used by said other set top box to download the multimedia file. This way, the download is faster and the overload of the third server computer 108 is avoided.

Then, a private network is created and the nodes of said network may share the multimedia files.

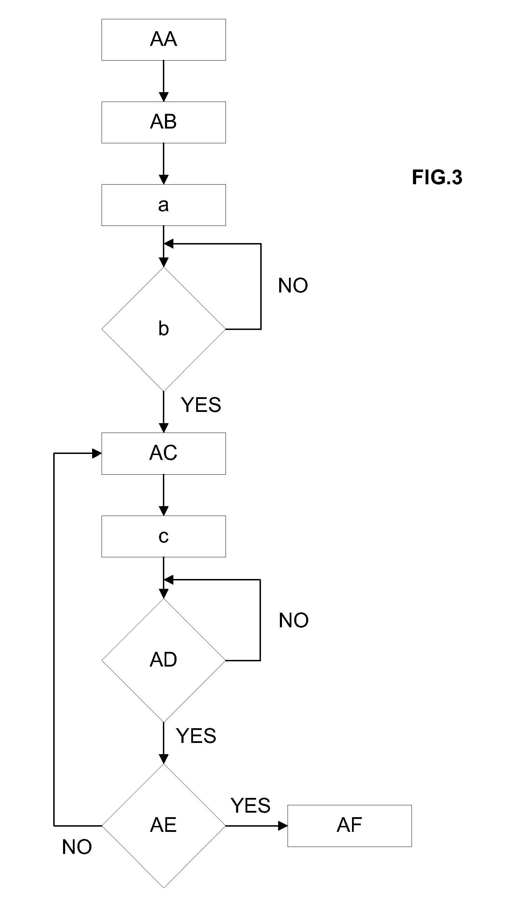

Following, the method for distributing a multimedia file will be described according to the description of the system and Fig.3.

Beginning the system in a state of idle, the server system 103, through the first server computer 105 validates (step AA) the set top box 101 according to the database 106 of users. Said validation may be performed, for example, from a request of connection of the set top box 101 to the server system 103 or for a programmed download. The validation parameters may be a "user name", a "password" and/or the identifying number of the set top box 101.

In this point, the second server computer 107 may display, in the television set 102 of the user U, an interface for navigating through the options of the system (e.g. for selecting the multimedia file to be distributed, etc.). In this case, the user U, acting on the navigation interface, selects (step d) the movie to be watched. In other case, if the distribution is a programmed download, it is not necessary to display said navigation interface; the first server computer 105 selects (step d) the multimedia file (e.g. a movie) to be distributed according to a set of parameters such as the type of multimedia files normally downloaded by the set top box 101 and/or the time in which downloads are requested.

Once the movie to be watched by the user U is selected, the first server computer 105 obtains (step AB) the first portion of the movie from the database 109 of multimedia files stored in the third server computer 108, and distributes (step a) said first portion to the set top box 101. The first portion in not higher than 5% of the movie.

Next, the first server computer 105 verifies (step b) if the first portion has been completely distributed to the set top box 101. In case of negative result, the first server computer 105 follows verifying said distribution. In case of positive result, the first server computer 105 obtains (step AC) the second portion of the movie from the third server computer 108 and distributes (step c) said second portion to the set top box. The second portion is not higher than 25% of the movie.

Following, the first computer server 105 verifies (step AD) if the second portion has been completely distributed. In case of negative result, the first server computer follows verifying said distribution. In case of positive result, the first server computer 105 verifies (step AE) if the second portion is the last portion of the movie. In case of positive result, the first server computer 105 finishes (step AF) the connection with the set top box 101. In case of negative result, the first server computer 105 obtains the third portion of the movie from the third server computer 108 and distributes it to the set top box 101. The third portion is not higher than 70% of the movie.

Next, the first server computer 105 verifies (step AD) if the third portion of the movie has been completely distributed. In case of negative result, the first server computer follows verifying said distribution. In case of positive result, the first server computer verifies (step AE) if the third portion is the last portion of the movie. Since the movie is split in three portions, the result is positive and the first server computer finishes (step AF) the connection with the set top box 101.

Fig. 4 shows the method from the point of view of the set top box 101, that is, the method for receiving a multimedia file. The method is the following.

The set top box receives (step e) the first portion of the movie (which are stored in the flash memory 221) and plays (step g) it when detects that the first portion has been completely received. Said detection can be performed by means of a verification of the set top box (101) or when the set top box begins to receive the second portion of the movie (said situation means that the first portion has been completely received because the first server computer 105 verifies it). At the same time, the set top box receives (step f) the second portion of the movie. Thus, the user U of the set top box 101 may begin to watch the movie while the second portion is being received.

Following, when the playing of the first portion finishes (step z), the second portion has been completely download and, consequently, it may be automatically played (step h) without interruptions between the reproduction of the first portion and the reproduction of the second portion. The reproduction has a sensation of continuity.

During the reproduction of the second portion, the set top box 101 receives (step f) the third portion of the movie. When the playing of the second portion finishes, the third portion of the movie has been completely downloaded and, consequently, it may be automatically played (step h) without interruption between the reproduction of the second portion and the reproduction of the third portion.

During the reproduction of a portion of the multimedia file, it is possible, acting on the infrared remote control 223, to verify the progress of download of the following portion to be watched.

On the other hand, it is possible to schedule the download of a movie (predownload). Then, the management of the broadband of the connection to Internet is easier. The schedule of download may be performed from internet, through a website, or from the set top box 101. Further, the system may comprise a WAP (Wireless Application Protocol) server for scheduling the download from a mobile phone.

Furthermore, it is possible to obtain information about the use of the network connection. In this case, a portion of the broadband may be assigned for technical maintenance of the set top box 101 in times in which the connection is not used or with a minimal use.

Although the present invention has been described in detail for purpose of illustration, it is understood that such detail is solely for that purpose, and variations can be made therein by those skilled in the art without departing from the scope of the invention.

Thus, while the preferred embodiments of the method and the system have been described in reference to the environment in which they were developed, they are merely illustrative of the principles of the inventions. Other embodiments and configurations may be devised without departing from the scope of the appended claims.

Further, although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When the program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. A method for distributing a multimedia file from a first computer system (103) to a second computer system (101), through a communication network (104), the multimedia file being split in at least two portions, the method comprising the steps of:
a) distributing the first portion of the multimedia file from the first computer system (103) to the second computer system (101), through the communication network (104);
b) verifying if the first portion is completely distributed to the second computer system (101);
in case of positive result, the method comprises the step of:
c) distributing the second portion of the multimedia file to the second computer system (101), such that, during said distribution of the second portion, the first portion may be played in the second computer system.

2. A method according to claim 1, further comprising a step (d) of selecting the multimedia file to be distributed to the second computer system (101).

3. A method according to claim 2, wherein step (d) of selecting the multimedia file to be distributed is performed in the second computer system (101).

4. A method according to claim 2, wherein step (d) of selecting the multimedia file to be distributed is performed in the first computer system (103) according to a set of parameters associated to the second computer system (101).

5. A computer program comprising program instructions for causing a computer system to perform the method according to any of claims 1 to 4.

6. A computer program according to claim 5, stored in a storing means.

7. A computer program according to claim 5, carried on a carrier signal.

8. A system for distributing a multimedia file from a first computer system (103) to a second computer system (101), through a communication network (104), **characterised in that** the multimedia file is split in at least two portions and **in that** the system comprises means for distributing the first portion of the multimedia file from the first computer system (103) to the second computer system (101), through the communication network (104); means for verifying if the first portion is completely distributed to the second computer system (101); means for distributing the second portion of the multimedia file to the second computer system, such that, during said distribution of the second portion, the first portion may be played in the second computer system.

9. A system according to claim 8, wherein the multimedia file is split in three portions, the first portion being not higher than 5% of the multimedia file, the second portion being not higher than 25%, and the third portion being the remaining portion of the multimedia file.

10. A system according to claim 9, wherein the third portion is not higher than 70% of the multimedia file.

11. A system according to any of claims 8 to 10, wherein the first computer system (103) comprises a first set of server computers (105) for validating the second computer system, a second set of server computers (108) for storing the multimedia files to be distributed, and a third set of server computers (107) for sending data, to the second computer system, about the multimedia files stored in the second set of server computers (108).

12. A system according to claim 11, wherein the first set of server computers (105) has assigned at least two static IP addresses.

13. A system according to any of claims 8 to 12, wherein the second computer system (101) comprises means (221) for storing the distributed portions of the multimedia files.

14. A system according to claim 13, wherein the storing means comprises a flash memory (221).

15. A system according to any of claims 13 or 14, wherein the multimedia files stored in the storing means (221) are encrypted.

16. A system according to any of claims 13 to 15, wherein the second computer system (101) comprises means for removing the multimedia files stored in the storing means (221) in case of the second computer system is opened.

17. A computer system (103) for distributing a multimedia file to another computer system (101), through a communication network (104), **characterised in that** the multimedia file is split in at least two portions and **in that** the computer system (103) comprises means for distributing the first portion of the multimedia file to the other computer system (101), through the communication network (104); means for verifying if the first portion is completely distributed to the other computer system (101); means for distributing the second portion of the multimedia file to the other computer system, such that, during said distribution of the second portion, the first portion may be played in the other computer system.

18. A computer system (101) for receiving a multimedia file distributed from another computer system (103), through a communication network (104), **characterised in that** the multimedia file is split in at least two portions and **in that** the computer system (101) comprises means for receiving the first portion of the multimedia file distributed from the other computer system (103), through the communication network (104); means for receiving the second portion of the multimedia file, such that, during said reception of the second portion, the first portion may be played in the computer system (101).

19. A method for receiving, in a computer system (101), a multimedia file distributed from another computer system (103), through a communication network (104), the multimedia file being split in at least two portions, the method comprising the steps of:
e) receiving, in the computer system (101), the first portion of the multimedia file distributed from the other computer system (103), through the communication network (104);
f) receiving the second portion of the multimedia file, such that, during said reception of the second portion, the first portion may be played in the computer system (101).

20. A method according to claim 19, further comprising a step (g) of playing, in the computer system (101), the first portion of the multimedia file during the reception of the second portion.

21. A method according to any of claims 19 or 20, further comprising a step (h) of playing the second portion of the multimedia file when the reproduction of the first portion is finished.

22. A computer program comprising program instructions for causing a computer system to perform the method according to any of claims 19 to 21.
